**Europäisches Patentamt**

**European Patent Office**

**Office européen des brevets**

(19)

(11) Veröffentlichungsnummer: **0 090 126**
**B1**

(12) **EUROPÄISCHE PATENTSCHRIFT**

(45) Veröffentlichungstag der Patentschrift:
**20.05.87**

(51) Int. Cl.⁴: **G 02 C 5/00,** G 02 C 5/12

(21) Anmeldenummer: **83100167.2**

(22) Anmeldetag: **11.01.83**

(54) Brille, insbesondere Sonnenschutzbrille mit einstellbarem Nasenteil.

(30) Priorität: **26.03.82 US 362297**

(43) Veröffentlichungstag der Anmeldung:
**05.10.83 Patentblatt 83/40**

(45) Bekanntmachung des Hinweises auf die Patenterteilung:
**20.05.87 Patentblatt 87/21**

(84) Benannte Vertragsstaaten:
**AT CH DE FR GB IT LI**

(56) Entgegenhaltungen:
**DE-A-2 810 679**
**FR-A-2 049 410**
**FR-A-2 231 980**
**FR-A-2 333 262**

(73) Patentinhaber: **OPTYL HOLDING GMBH & CO.**
**VERWALTUNGS- KG, Hans- Stiessberger- Strasse**
**2a, D-8013 Haar bei München (DE)**

(72) Erfinder: **Dianitsch, Franz, Lerchenau 3, A-4020 Linz**
**(AT)**

LIBER, STOCKHOLM 1987

## Beschreibung

Die Erfindung bezieht sich auf eine Brille, insbesondere auf eine Brille mit einem einstellbaren Nasenteil.

Brillen sollten anziehend und gefällig wirken sowie gegebenenfalls, z.B. bei Sonnenbrillen, einen Schutz für die Augen bieten. Außerdem sollten Brillen dem Brillenträger angemessen und bequem angepaßt sein. Da die Nase des Trägers gewöhnlich zur Halterung der Brille dient und zwar zeitweilig für mehrere Stunden, verdienen Komponenten, welche mit der Nase in Berührung stehen, eine spezielle Beachtung. Insbesondere durch den Handel vertriebene Sonnenschutzbrillen müssen mannigfaltigen Nasenformen potentieller Kunden gerecht werden.

Zur Anpassung an einen größeren Kundenkreis von Brillenträgern sind Brillen, insbesondere Sonnenschutzbrillen mit einstellbaren Nasenteilen versehen worden. So beschreibt die DE-A- 28 10 679 eine Brille mit einem Nasenteil, welcher über biegsame und somit verstellbare Haltedrähte mit dem übrigen Brillengestell in Verbindung steht. Eine solche Vorrichtung oder ähnliche Einrichtungen sind jedoch schwerfällig, plump, oder sonst dem ästhetischen Aussehen einer Sonnenschutzbrille abträglich. Ferner sind solche Vorrichtungen oft kostspielig. Besondere Schwierigkeiten treten dann auf, wenn die Sonnenschutzbrille zusammenlegbar bzw. faltbar sein soll wie z.B. die Brille der FR-A- 2 049 410.

Es ist allgemein üblich, ein Nasenpolster, auch "Pad" genannt, mit einer Randfassung oder einem anderen Gestellabschnitt der Sonnenbrille mittels eines Drahtes zu verbinden, welcher unelastisch deformierbar ist. Jedoch sind diese Drähte insbesondere nach wiederholten Einstellungen gegen Bruch anfällig.

Erfindungsziel ist es daher, eine Brille, insbesondere eine Sonnenbrille mit einem stilvollen Nasenteil mit Pads zu schaffen, welche oftmals verstellbar sind, ohne der Gefahr eines Bruches ausgesetzt zu sein, wobei die Brille sowohl eine normale als auch eine faltbare Sonnenbrille sein kann.

Dieses Ziel wird erreicht durch eine Brille, insbesondere Sonnenschutzbrille, mit einem Paar Randfassungen zur Halterung der Brillengläser; mit einem mittleren Steg, welcher die Randfassungen im Nasenbereich des Brillenträgers untereinander verbindet; mit einem paar Brillenbügel an der dem mittleren Steg abgewandten Seite der Randfassungen; mit einem paar flexibler Pads, welche auf der Nase des Brillenträgers ruhen; und mit Einrichtungen zum Befestigen der Pads am Brillengestell, bestehnd aus Drähten, welche wiederholt plastisch deformierbar sind, wobei jeder Draht einen Endabschnitt aufweist, welcher an einem zugehörigen Pad befestigt ist, und ein entgegengesetztes Ende aufweist, welches mit der zugehörigen Randfassung in Verbindung steht. Die erfindungsgemäße Brille ist dadruch gekennzeichnet, daß jeder Draht einen Mittelabschnitt solcher länge besitzt, daß er ohne lokale Materialermündung plastisch deformierbar ist, um die Lage des Pads in Bezug auf die zugehörige Randfassung einzustellen, und daß zusätzliche Einrichtungen zum angelenkten Befestigen jedes Pads am mittleren Steg vorgesehen sind.

Der Nasenteil der erfindungsgemäßen Brille weist einen die Randfassungen verbindenden mittleren Steg sowie flexible Nasenpolster (Pads) auf, welche auf der Nase des Trägers ruhen. Bindeglieder wie etwa Stifte, welche in den mittleren Steg und jedes Pad eingesetzt sind, halten die Pads am Steg fest. Bei einer faltbaren Sonnenbrille ist der mittlere Steg in an sich bekannter Weise als Scharnier ausgebildet, wobei jeder Scharnierteil mit einer zugehörigen Randfassung in Verbindung steht. Die erwähnten Bindeglieder bzw. Stifte sind hierbei in je einen zugehörigen Scharnierteil eingesetzt, so daß ein Falten der Brille die räumliche Beziehung zwischen jedem Pad und den Elementen, an welche es angegliedert ist, nicht stört.

Der Draht, der mit einem pad in Verbindung steht, ist so gelagert und gestaltet, daß eine bei der Einstellung des betreffenden Pads erduldete Deformierung des Drahtes über eine wesentliche Drahtlänge verteilt ist, so daß eine Materialermüdung nicht übermäßig stark lokalisiert ist. Vorzugsweise ist der Mittelabschnitt des Drahtes länger als der Abstand zwischen einem Pad und der zugehörigen Randfassung, so daß das Pad um einen zugehörigen Stift herum gedreht werden kann. Die Bewegung des Pads ist auf Drehungen um den Stift herum eingeschränkt, welcher im mittleren Steg bzw. einem zugehörigen Scharnierteil angelenkt sein kann. Der Draht begrenzt die Bewegung des Pads, so daß der Stift innerhalb eines entsprechenden Loches im Steg verbleibt.

Der einstellbare Nasenteil bietet eine stilvoll-ästhetische Brille, welche von vielen Benutzern sicher und bequem getragen werden kann, was bei Schutzbrillen, z.B. Sonnenschutzbrillen, von Bedeutung ist. Außer dem bietet die faltbare Ausführungsform eine Brille, welche, wenn sie nicht getragen wird, bequem aufbewahrt bzw. abgelegt werden kann.

Figur 1 der anliegenden Zeichnungen ist eine perspektivische Vorderansicht einer erfindungsgemässen Brille;

Figur 2 ist eine perspektivische rückwärtige Ansicht der Brille von Figur 1;

Figur 3 ist eine Vorderansicht eines Nasenteils der erfindungsgemässen Brille;

Figur 4 ist eine Schnittansicht des in Figur 3 gezeigten Nasenteils längs Linie 4-4 von Fig. 3;

Figur 5 ist eine auseinandergezogene Ansicht des Nasenteils von Figur 3;

Figur 6 ist eine vergrösserte Ansicht eines der in Figur 5 gezeigten Stifte; und

Figur 7 ist eine Seitenansicht des Abschnittes einer Brillenrandfassung mit dem Abschnitt des daran angegliederten Nasenteils von Figur 3.

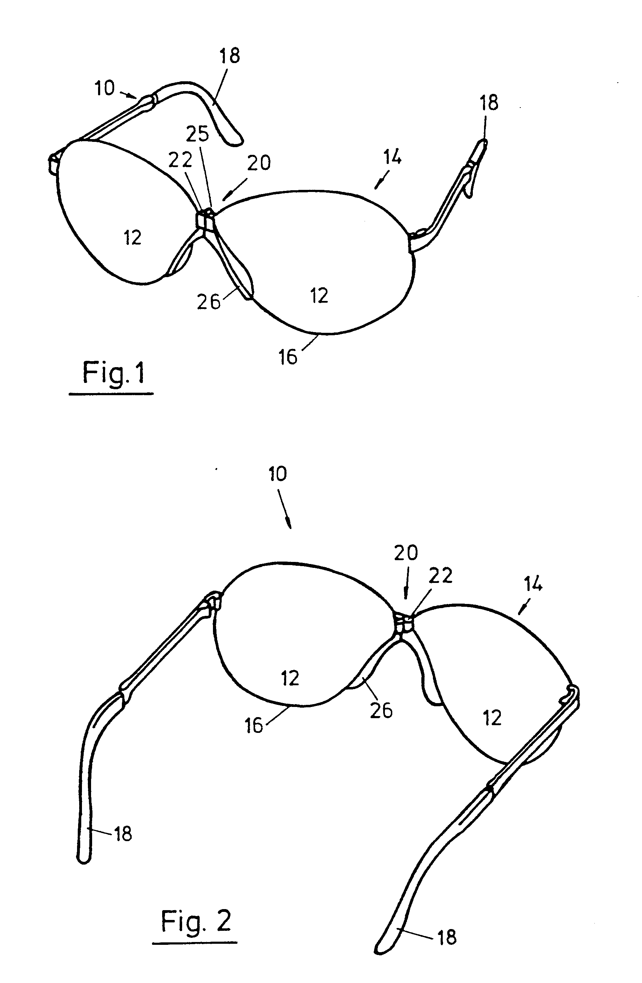

Wie die Figuren 1 und 2 zeigen, besitzt die erfindungsgemässe Brille 10 ein Paar Sichtscheiben bzw. -linsen 12, ein Gestell 14 mit einem Paar Randfassungen 16 zum Haltern der Linsen 12, mit dem Gestell 14 in Verbindung stehende Bügel 18 oder ähnliche Einrichtungen zum Haltern der Brille 10 während des Tragens, und einen einstellbaren Nasenteil 20. Der Nasenteil 20 haltert die Sonnenbrille 10 auf der Nase des Trägers und überbrückt die Randfassungen 16.

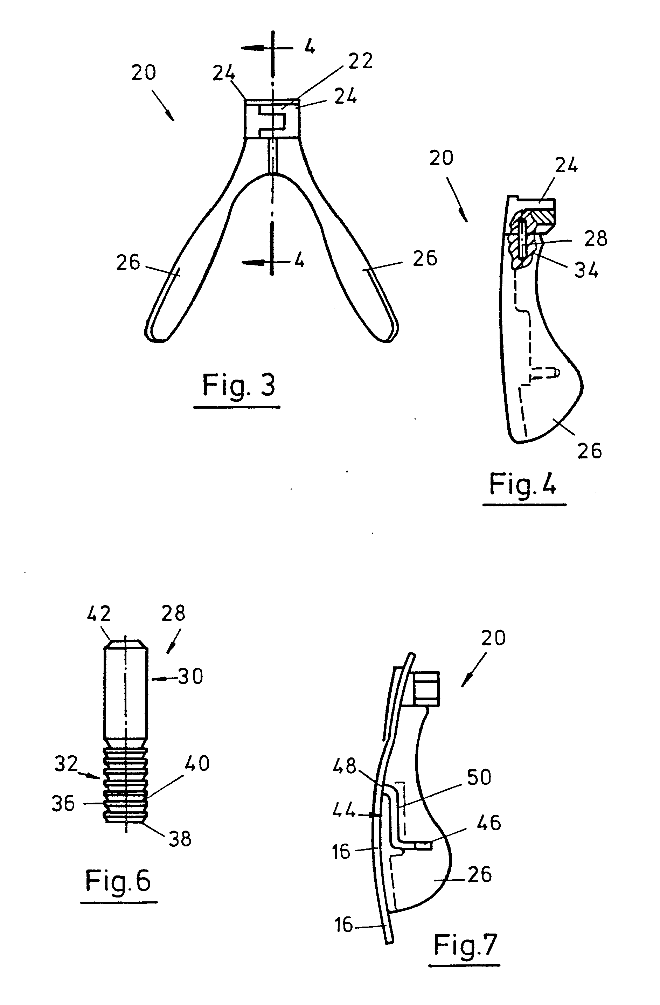

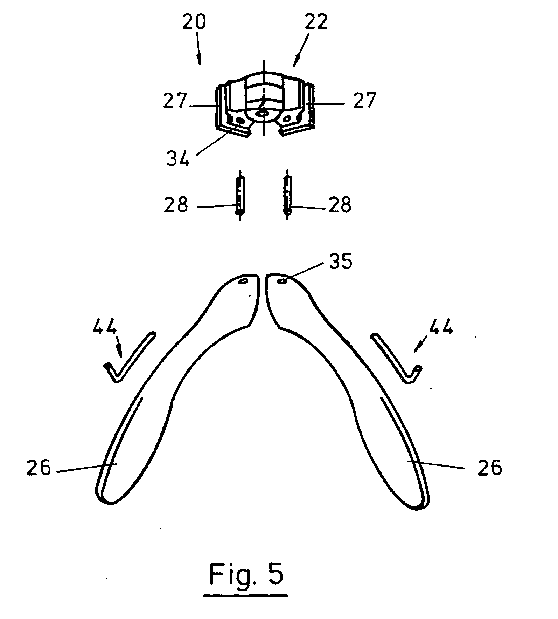

Der Nasenteil 20 weist einen Steg 22 auf, welcher bei der veranschaulichten Ausführungsform mit Scharnier versehen ist und zwei Scharnierteile 24 besitzt, welche um einen Scharnierstift 25 angelenkt verbunden sind. Jeder Scharnierteil 24 kann eine vertikal sich erstreckende Rille 27 (Fig.5) zur Aufnahme eines Abschnittes der entsprechenden Randfassung 16 aufweisen, welche dort eingeschweisst sein kann. Unterhalb des Steges 22 befinden sich biegsame Pads 26, welche beim Tragen der Brille 10 auf der Nase des Trägers ruhen (Fig.3). Die Nasenpolster 26 bestehen aus relativ weichem, flexiblem Kunststoff, um dem Brillenträger eine bequeme Brillenhalterung zu bieten.

Jedes Pad 26 ist mit einem zugehörigen Scharnierteil 24 mittels eines Stiftes 28 oder einer anderen Verbindungseinrichtung verbunden. Jeder Stift 28 besitzt einen oberen Abschnitt 30, welcher innerhalb eines im Scharnierteil 24 befindlichen Loches 34 angelenkt eingepasst ist. Der untere Abschnitt 32 eines jeden Stiftes 28 ist innerhalb eines Loches 35 im Oberteil des zugehörigen Pads 26 befestigt, wie in Figur 4 gezeigt. Zur besseren Befestigung des Stiftes 28 innerhalb des weichen Kunststoffes des Pads 26 ist der untere Abschnitt 32 des Stiftes 28 auf seinem Umfang mit Rippen 36 versehen, welche die Reibungsberührung zwischen dem Stift 28 und dem Pad 26 steigern. Wie in Figur 6 gezeigt, werden die Rippen 36 durch eine Reihe unterer nach abwärts abgeschrägter Regionen 38 gebildet. Diese Abschrägung erleichtert das Einsetzen des Stiftes in das Pad, während die ebenen oberen Regionen 40 des Abschnittes 32 dem Entfernen entgegenwirken. Das obere Ende 42 des Stiftes 28 kann ebenfalls abgeschrägt sein, um das Einsetzen in den entsprechenden Scharnierteil 24 zu erleichtern. Der obere Abschnitt 30 jedes Stiftes 28 ist im allgemeinen zylindrisch und glatt, damit er sich innerhalb seines zugehörigen Loches 34 drehen kann, sodass auch jedes Pad 26 in Bezug auf seinen entsprechenden Scharnierteil 24 drehbar ist.

Jedes Pad 26 ist mit der zugehörigen Randfassung 16 über einen Draht 44 verbunden, wie dies in Figur 7 gezeigt ist. Der eine Endabschnitt 46 des Drahtes 44 erstreckt sich, vorzugsweise horizontal, an einer solchen Stelle in die eine Kante des Pads 26 hinein, dass der Scharnierstift 28 innerhalb des zugehörigen Scharnierteiles 24 gehaltert ist. Das entgegengesetzte Ende 48 des Drahtes 44 ist mit der zugehörigen Randfassung 16 vorzugsweise durch Anschweissen verbunden. Der Mittelabschnitt 50 des Drahtes 44, welcher sich zwischen den Endabschnittes 46 und 48 vorzugsweise nach aufwärts erstreckt, kann zur Einstellung der Lage des Pads 26 deformiert bzw. verbogen werden. Vorzugsweise bildet der Mittelabschnitt 50 mehr als die halbe Länge des Drahtes 44. Der Draht 44 ist stark genug, um der normalen Beanspruchung während des Tragens und des Gebrauchs standzuhalten, sodass die Einstellung des Nasenteils 20 nicht leicht unabsichtlich verändert werden kann. Andererseits ist der Draht 44 hinreichend biegsam, um von Hand oder mit Hilfe eines Handwerkzeuges wie etwa einer dünnen Drahtzange deformiert zu werden, sodass der Nasenteil 20 zur Anpassung an den Geschmack und die Nasenform des Trägers eingestellt werden kann. Ferner kann der Draht 44 wiederholte Male plastisch verformt bzw. verbogen werden, ohne dass das Drahtmaterial übermässig ermüdet oder gar bricht, sodass mehrere aufeinanderfolgende Einstellungen vorgenommen werden können.

Bei bisherigen Brillen ist ein kurzes Drahtstück vorgesehen, welches sich relativ direkt von einer Randfassung zum Pad erstreckt. Dagegen ist bei der hier beschriebenen Brille die Länge des Mittelabschnittes 50 beträchtlich grösser als der Abstand zwischen Randfassung 16 und Pad 26. Bei der veranschaulichten Ausführungsform ist diese Länge mindestens eine Grössenordnung grösser als der Abstand zwischen der Randfassung 16 und dem Pad 26, obgleich Randfassung und Pad praktisch in Berührung miteinander stehen. Der Draht 44 ist so gelagert und beschaffen, dass eine bei der Einstellung des Pads 26 erduldete Deformierung über eine wesentliche Strecke des Mittelabschnitts 50 des Drahtes 44 verteilt wird, sodass eine gegebenenfalls eintretende Ermüdung nicht übermässig lokalisiert wird. Jedes Pad 26 kann in Bezug auf seinen zugehörigen Scharnierteil 24 gedreht werden, wobei die Drehung einen leichten Drall um die Achse des Mittelabschnittes 50 des Drahtes 44 ergibt. Der Draht 44 ist im wesentlichen unsichtbar, wenn die Brille 10 getragen wird, sodass er dem ästhetischen Aussehen der Brille 10 nicht abträglich ist.

Wie aus den Figuren 1 und 2 ersichtlich, schafft die Erfindung eine Brille mit einstellbarem Nasenteil, welcher sich ästhetisch in das neuartige Brillendesign einfügt. Die Anordnung ist bequem und gestattet ein Zusammenfalten der Brille. Jedoch kann der einstellbare Nasenteil auch bei einer nicht faltbaren Brillenkonstruktion eingefügt werden.

Die Erfindung ist nicht auf die hier beispielsweise wiedergegebene Ausführungsform speziell abgestellt. Im Rahmen der in den Ansprüchen definierten Erfindung sind dem Fachmann vielmehr mannigfaltige Abänderungen ohne weiteres gegeben.

## Patentansprüche

1. Brille, insbesondere Sonnenschutzbrille, mit einem Paar Randfassungen (16) zur Halterung der Brillengläser (12); mit einem mittleren Steg (22), welcher die Randfassungen im Nasenbereich des Brillenträgers untereinander verbindet; mit einem Paar Brillenbügel (18) an der dem mittleren Steg (22) abgewandten Seite der Randfassungen (16); mit einem Paar flexibler Pads (26), welche auf der Nase des Brillenträgers ruhen; und mit Einrichtungen zum Befestigen der Pads (26) am Brillengestell (14), bestehend aus Drähten (44), welche wiederholt plastisch deformierbar sind, wobei jeder Draht (44) einen Endabschnitt (46) aufweist, welcher an einem zugehörigen Pad (26) befestigt ist, und ein entgegengesetztes Ende (48) aufweist, welches mit der zugehörigen Randfassung (16) in Verbindung steht, dadurch gekennzeichnet, daß jeder Draht (44) einen Mittelabschnitt (50) solcher Länge besitzt, daß er ohne lokale Materialermüdung plastisch deformierbar ist, um die Lage des Pads in Bezug auf die zugehörige Randfassung (16) einzustellen, und daß zusätzliche Einrichtungen (28) zum angelenkten Befestigen jedes Pads (26) am mittleren Steg (22) vorgesehen sind.

2. Brille nach Anspruch 1, dadurch gekennzeichnet, daß der mittlere Steg (22) als Scharnier ausgebildet ist, wobei jeder Scharnierteil (24) mit einer zugehörigen Randfassung (16) in Verbindung steht, so daß das Brillengestell (14) zusammenfaltbar ist; und daß die zusätzlichen Einrichtungen (28) an je einem zugehörigen Scharnierteil (24) angelenkt sind.

3. Brille nach einem der vorhergehenden Ansprüche, dadurch gekennzeichnet, daß im mittleren Steg (22) bzw. in jedem Scharnierteil (24) zur Verbindung mit der zugehörigen Randfassung (16), eine vertikale Rille vorgesehen ist.

4. Brille nach Anspruch 2 oder 3, dadurch gekennzeichnet, daß die zusätzlichen Einrichtungen zum angelenkten Befestigen der Pads (26) an dem zugehörigen Scharnierteil (24) Stifte (28) aufweisen, wobei jeder Stift (28) einen oberen Abschnitt (30) und einen unteren Abschnitt (32) aufweist und der obere Abschnitt (30) in einem abwärts gerichteten Loch (34) im zugehörigen Scharnierteil (24) drehbar gelagert ist und der untere Abschnitt (32) im Oberteil des zugehörigen Pads (26) befestigt ist.

5. Brille nach Anspruch 4, dadurch gekennzeichnet, daß die unteren Abschnitte (32) der Stifte (28) Umfangsrippen (36) zur Steigerung der physikalischen Berührungsfläche zwischen jedem Stift (28) und dem zugehörigen Pad (26) aufweisen.

6. Brille nach einem der vorhergehenden Ansprüche, dadurch gekennzeichnet, daß mehr als die halbe Länge jedes Drahtes (44) den Mittelabschnitt (50) zwischen seinen Endabschnitten (46, 48) ausmacht.

7. Brille nach einem der vorhergehenden Ansprüche, dadurch gekennzeichnet, daß der padseittige Endabschnitt (46) eines jeden Drahtes (44) sich in Tragestellung der Brille im wesentlichen horizontal in das zugehörige Pad (26) erstreckt und der Mittelabschnitt (50) sich im wesentlichen nach aufwärts vom padseitigen Endabschnitt (46) zu dem entsprechenden entgegengesetzten Ende (48) erstreckt.

## Claims

1. Spectacles, more particularly sunglasses, having: a pair of eye rims (16) to retain the lenses (12); a central web (22) connecting the eye rims together near the wearer's nose; a pair of tips (18) on that side of the eye rims (16) which is remote from the central web (22); a pair of flexible pads (26) which rest on the wearer's nose; and provision for securing the pads (26) to the spectacle frame (14), the provision for securing the pads (26) being in the form of wires (44) adapted to withstand repeated plastic deformation, each wire (44) having one end part (46) secured to an associated pad (26) and an opposite end (48) connected to the associated eye rim (16), characterised in that each wire (44) has a central part (50) of a length such as to be plastically deformable without local material fatigue in order to adjust pad position relatively to the associated eye rim (16), and there is further provision (28) for pivotally securing each pad (26) to the central web (22).

2. Spectacles according to claim 1, characterised in that the central web (22) is in the form of a hinge, each part (24) thereof being so connected to an associated eye rim (16) that the spectacle frame (14) is collapsible, and the further provision (28) is articulated to each associated hinge part (24).

3. Spectacles according to any of the previous claims, characterised in that the central web (22) or each hinge part (24) is formed with a vertical groove for connection to the associated eye rim (16).

4. Spectacles according to claim 2 or 3, characterised in that the further provision for pivotally securing the pads (26) to the associated hinge part (24) has pins (28) each having a top part (30) and a bottom part (32), the top part (30) being rotatably mounted in a downwardly directed aperture (34) in the associated hinge part (24), the bottom part (32) being secured in the top part of the associated pad (26).

5. Spectacles according to claim 4, characterised in that the bottom parts (32) of the pins (28) have peripheral ribs (36) to increase the physical contact area between each pin (28) and the associated pad (26).

6. Spectacles according to any of the previous claims, characterised in that the central part (50) of each wire (44) between the end parts (46, 48) thereof is more than half the length of such wire.

7. Spectacles according to any of the previous claims, characterised in that, with the spectacles in the position for being worn, that end part (46) of each wire (44) which is near the pad extends substantially horizontally into the associated pad (26) and the central part (50) extends substantially upwards from the end part (46) near the pad to the corresponding opposite end (48).

**Revendications**

1°) Lunettes, notamment lunettes de soleil, comportant une paire d'entourage périphérique (16) pour tenir les verres de lunettes (12), une entretoise centrale (22) qui relie entr'eux les entourages périphériques dans la zone nasale de l'utilisateur; une paire de branches de lunettes (18) située sur les entourages périphériques (16) du côté opposé de celui de l'entretoise centrale (22); une paire de plaquettes nasales (26) souples qui s'appuient sur le nez de l'utilisateur et des moyens pour fixer les plaquettes nasales (26) sur la monture de lunettes (14), ce moyen se composant de fils (44) qui peuvent se déformer de manière plastique, répétée, chaque fil (44) comportant un segment d'extrémité (46) fixé à la plaquette nasale (26) correspondante, ainsi qu'une extrémité opposée (48) reliée à l'entourage peripherique (16) correspondant, lunette caractérisée en ce que chaque fil (44) comporte un segment médian (50) de longueur telle qu'il soit déformable de manière plastique sans fatigue locale de la matière pour permettre le réglage de la position de la plaquette nasale par rapport à l'entourage périphérique (16) correspondant et en ce qu'en outre des moyens (28) sont prévus pour la fixation articulée de chaque plaquette nasale (26) sur l'entretoise médiane (22).

2°) Lunettes, selon la revendication 1, caractérisées en ce que l'entretoise médiane (22) est en forme de charnière et chaque partie de charnière (24) est reliée à un entourage périphérique (16) correspondant de manière que la monture de lunettes (14) puisse se plier; et en ce que des moyens supplémentaires (28) sont articulés respectivement sur la partie de charnière (14) correspondante.

3°) Lunettes, selon l'une des revendications précédentes, caractérisées par une rainure verticale dans l'entretoise médiane (22) ou dans chaque partie de charnière (24) pour la liaison avec l'entourage périphérique (16) correspondant.

4°) Lunettes selon les revendications 2 ou 3, caractérisées en ce que les moyens supplémentaires pour la fixation articulée de la plaquette nasale (26) sur la partie de charnière (24) correspondante, comprennent des tiges (28), chaque tige (28) ayant une section supérieure (30) et une section inférieure (32) et la section supérieure (30) est logée a rotation dans un trou (34) dirigé vers le haut dans la partie de charnière (24) correspondante, le segment inférieur (32) étant fixé dans la partie supérieure de la plaquette nasale (26) correspondante.

5°) Lunettes selon la revendication 4, caractérisées en ce que le segment inférieur (32) de la tige (28) porte des nervures périphériques (36) pour augmenter la surface de contact physique entre chaque tige (28) et la plaquette nasale (26) correspondante,

6°) Lunettes selon l'une des revendications précédentes, caractérisées en ce que le segment médian (50) entre les segments d'extrémités (46, 48) correspond plus de la moitié de la longueur de chaque fil (44).

7°) Lunettes selon l'une des revendications précédentes, caractérisées en ce que le segment d'extrémité (46) situé du côté de la plaquette nasale de chaque fil (44) pénètre principalement suivant une direction horizontale dans la plaquette nasale (26) correspondante lorsque les lunettes sont portées et le segment médian (50) est pratiquement dirigé vers le haut en partant du segment d'extrémité (46) situé du côté de la plaquette nasale pour rejoindre l'extrémité (48) opposée, correspondante.

Fig. 1

Fig. 2

1

Fig. 3

Fig. 4

Fig. 6

Fig. 7

3

Fig. 5